# FASCICULE DE BREVET EUROPEEN

(11) **EP 1 192 862 B1**
(45) Date de publication et mention de la délivrance du brevet: **04.08.2004**
(21) Numéro de dépôt: 01402473.1
(22) Date de dépôt: 26.09.2001
(51) Int. Cl.: A21C 1/06, A21C 1/14, B01F 7/02, B01F 15/00

(54) **Pétrin horizontal à pales inclinées**
Horizontale Knetmaschine mit schräg angeordneten Schaufeln
Horizontal kneading machine with inclined paddles

(30) Priorité: 28.09.2000 FR 0012373
(43) Date de publication de la demande: 03.04.2002
(73) Titulaire: VMI, 85600 Montaigu (FR)
(72) Inventeur: Vannier, Guillaume, 44100 Nantes (FR); Fisson, Gérard, 85600 Saint Hilaire de Loulay (FR); Jaunet, Laurent, 85600 Saint Hilaire de Loulay (FR)
(74) Mandataire: Geismar, Thierry

(56) Documents cités:
- EP-A- 0 839 450
- FR-A- 2 673 690
- FR-A- 2 759 863
- FR-A- 2 790 484
- GB-A- 1 015 880
- GB-A- 2 264 623
- US-A- 1 497 957
- US-A- 1 750 710
- PATENT ABSTRACTS OF JAPAN vol. 005, no. 128 (C-067), 18 août 1981 (1981-08-18) & JP 56 064750 A (SEKINE MINORU), 2 juin 1981 (1981-06-02)

## Description

L'invention concerne un pétrin à axe de mélange horizontal et à cuve de mélange basculante.

Plus particulièrement l'invention s'applique aux pétrins de fabrication industrielle de pâte pour boulangerie, pâtisserie, viennoiserie, tels que définis dans le préambule de la revendication 1. De tels pétrins sont décrits dans les documents FR 2 759 863, FR 2 673 690. Toutefois la qualité du pétrissage n'est pas toujours optimale avec la forme de cuve, cette cuve étant symétrique par rapport à un axe vertical, et la forme du rotor utilisée.

En outre, l'on souhaite dans certains cas régler avec précision la texture de la pâte selon sa destination, en effectuant un pétrissage sous pression et/ou sous vide. Par exemple, à forte pression dans la cuve de pétrissage, la pâte sera utilisée surtout pour la fabrication de baguette (structure « ouverte »), tandis que à faible pression la pâte sera utilisée pour du pain de mie blanc. On connaît déjà des pétrins utilisant une alternance vide pression.

Par exemple, le document EP 629 115 décrit successivement une étape de surpression et une étape à pression réduite pour un traitement particulier lié à l'acide ascorbique. En outre, ce pétrin présente deux compartiments, la cuve de mélange et un compartiment pression/vide, ce qui peut poser des difficultés d'utilisation notamment liée au déplacement de farine pulvérulente entre les compartiments.

L'invention à pour objet de palier les inconvénients de l'art antérieur, en proposant un pétrin horizontal qui à la fois améliore la qualité du pétrissage, et permet un traitement sous vide/sous pression optimal.

A cet effet l'invention a pour objet un pétrin à axe de mélange horizontal pour la fabrication de pâte de boulangerie ou analogue, suivant la revendication 1.

Les moyens de pétrissage comprennent au moins un ensemble de pales montées sur le rotor, chaque ensemble comportant deux, trois ou quatre pales, l'extrémité libre de chaque pale suivant une trajectoire circulaire.

Selon un mode de réalisation chaque pale comprend un premier segment sensiblement rectiligne et un second segment, excentrés par rapport à l'axe du rotor, et inclinés entre eux de 90 à 120°.

Selon un autre mode de réalisation chaque pale comprend une première portion axiale selon la direction radiale et une seconde portion distale inclinée de 5 à 20° par rapport à la première portion axiale.

La partie extrême libre de la seconde portion distale est sensiblement rectiligne ou arrondie

La vitesse de rotation des pales est typiquement de 10 à 250 tours/min, et la capacité de la cuve du pétrin est comprise entre 200 et 600 litres, typiquement 400 litres, le sens de rotation des pales et la vitesse de rotation étant selon les paramètres de pétrissage.

Selon un mode de réalisation, la cuve est asymétrique par rapport à un plan vertical passant par l'axe de rotation lorsque le pétrin est en position de fonctionnement.

Le pétrin comprend une première paroi latérale sensiblement verticale, et une deuxième paroi latérale inclinée d'un angle de l'ordre de 10 à 30° avec la verticale, le fond de cuve courbe reliant la première paroi à la seconde paroi latérale.

La cuve comprend, du côté de la deuxième paroi latérale, un espace s'évasant vers le haut en forme de croissant, situé entre la deuxième paroi latérale et la trajectoire suivie par l'extrémité libre des pales, la paroi latérale inclinée étant écartée de cette trajectoire.

Sur une certaine ouverture angulaire, de l'ordre d'un quart de tour, du côté de la première paroi latérale, la paroi interne de la cuve est sensiblement tangente à la trajectoire décrite par le bord libre des pales.

L'angle entre, d'une part le plan vertical passant par l'axe du rotor, et d'autre part le plan passant par l'axe du rotor et la jonction entre la portion plane de la deuxième paroi latérale et la portion courbe de la deuxième paroi latérale, est compris entre 80 et 120°, typiquement 100°

La distance dans le plan parallèle au fond de cuve entre l'axe du rotor et la seconde paroi latérale est comprise entre 1,2 et 2 fois le rayon du cercle emprunté par l'extrémité libre des pales

Par ailleurs le dispositif pression/vide comprend des moyens de mise sous pression raccordés à la cuve à sa partie extrême supérieure.

Le pétrin comprend des moyens de basculement comportant un palier de basculement de la cuve de chaque côté de la cuve, équipé d'au moins un vérin monté d'une part sur le chassis et d'autre part sur le palier, l'actionnement du vérin provoquant la rotation de la cuve autour de son axe horizontal entre au moins une position de versement de son contenu, le couvercle de la cuve étant retiré, une position de mélange, une position de nettoyage/maintenance.

Le palier du rotor est coaxial et entouré par le palier de basculement de la cuve

Le pétrin comprend un couvercle de verrouillage de la cuve, coulissant par rapport à l'ouverture de la cuve le long de colonnes de guidage, le couvercle étant en position retirée d'écartement libre de la cuve lorsque la cuve bascule.

Selon une réalisation il comprend un dispositif d'étanchéité comportant de chaque côté de la cuve un palier de rotor amovible comprenant une entretoise située entre l'arbre du rotor et les joints d'étanchéité du dispositif d'étanchéité.

Selon une réalisation la cuve comprend un dispositif de circulation destiné à refroidir ou maintenir en température le produit mélangé.

D'autres objets et avantages de l'invention apparaîtront au cours de la description, description qui va être faite en référence aux dessins annexés illustrant un mode de réalisation, dessins dans lesquels :
- la figure 1 est une vue en perspective du pétrin selon un mode de réalisation de l'invention, le couvercle de la cuve étant en position de fermeture et la cuve étant non basculée ;

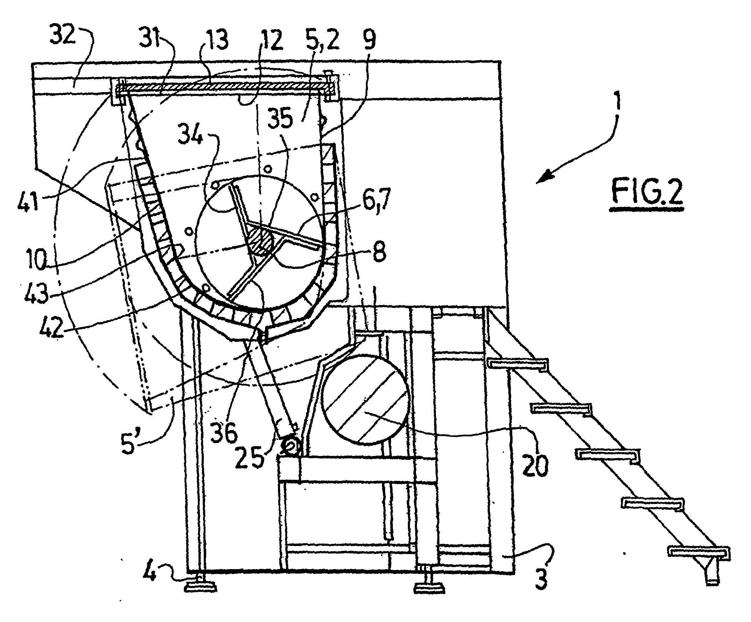

- la figure 2 est une vue du pétrin en coupe longitudinale selon la ligne I-I de la figure 1, entre une position de fonctionnement cuve verticale, et une position cuve basculée ;

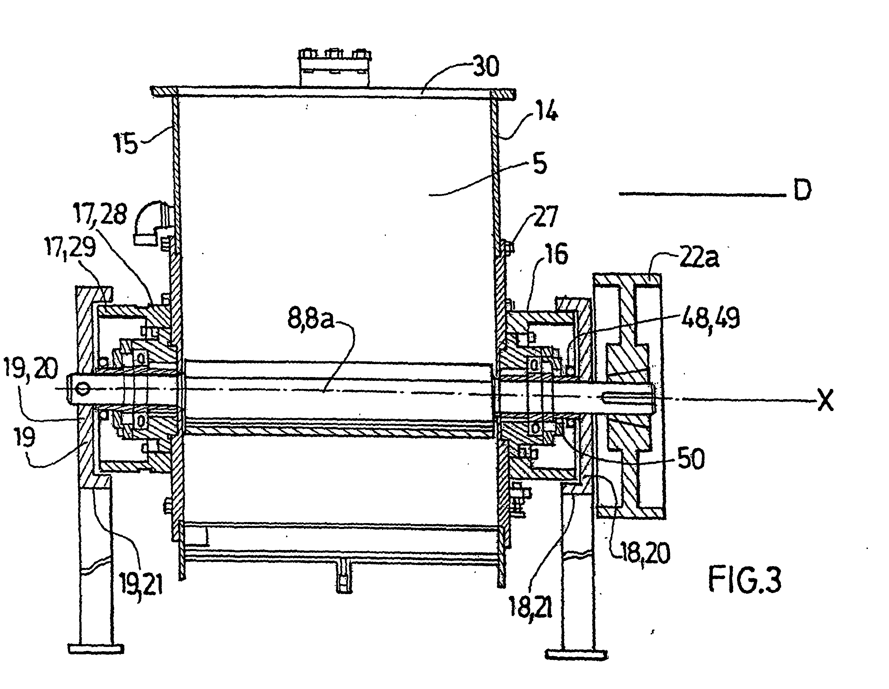

- la figure 3 est une vue en coupe transversale du pétrin selon la ligne II-II de la figure 1 ;

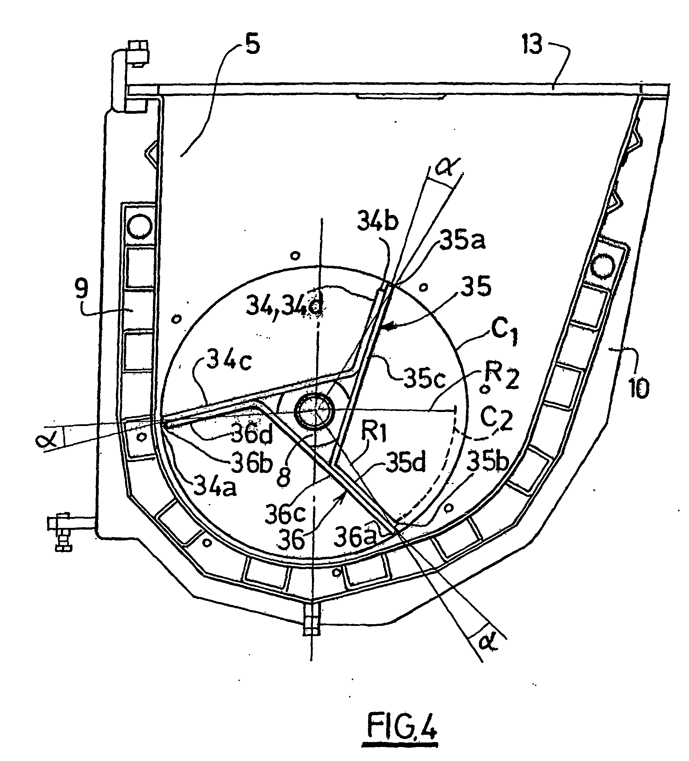

- la figure 4 est une vue en coupe de la cuve selon un mode de réalisation de l'invention, illustrant l'inclinaison des pales du rotor ;

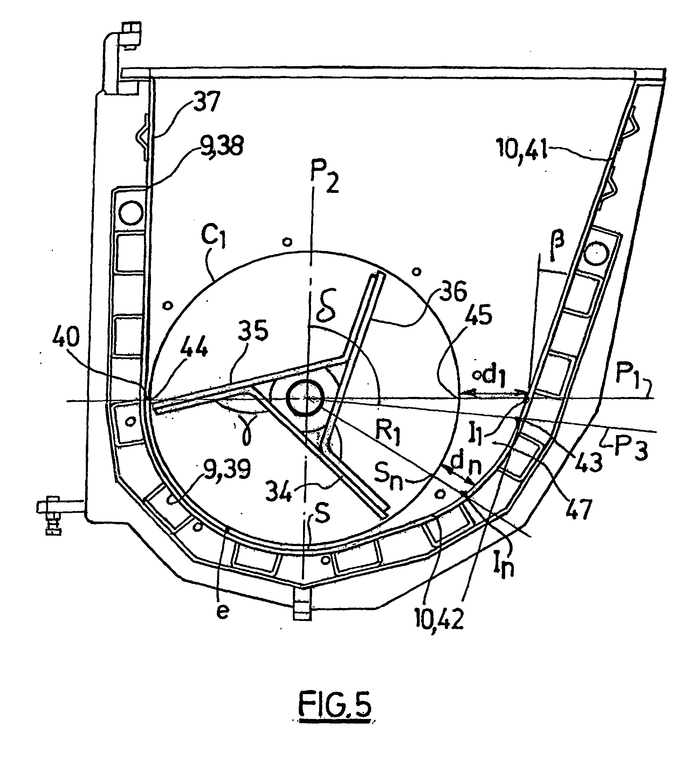

- la figure 5 est une vue analogue à la figure 4, illustrant la forme asymétrique de la cuve;
- les figures 6a, 6b, 6c représentent des variantes de réalisation du rotor en faisant varier le nombre de pales ;
- la figure 7 représente des variantes de réalisation de la forme de la cuve en faisant l'écart entre la paroi écartée de la cuve et la trajectoire des pales.

On décrit maintenant un mode de réalisation de l'invention.

Le pétrin 1 est un pétrin horizontal. Il comporte un châssis 3 présentant des pieds de support 4, et une cuve 5 de mélange présentant une enceinte 2.

La cuve 5 est munie de moyens de pétrissage 6 comprenant des pales 7 entraînées en rotation, en position de fonctionnement c'est à dire de pétrissage de la pâte, par un rotor 8 qui s'étend selon un axe horizontal X.

La cuve 5 comprend deux parois latérales 9, 10 reliées par le fond 11 de la cuve, une ouverture 12 en position supérieure obturable par un couvercle 13 amovible, et deux parois transversales 14, 15.

Les ingrédients sont introduits dans la cuve 5 par l'ouverture 12.

Les deux parois 9, 10 s'entendent selon une direction longitudinale D.

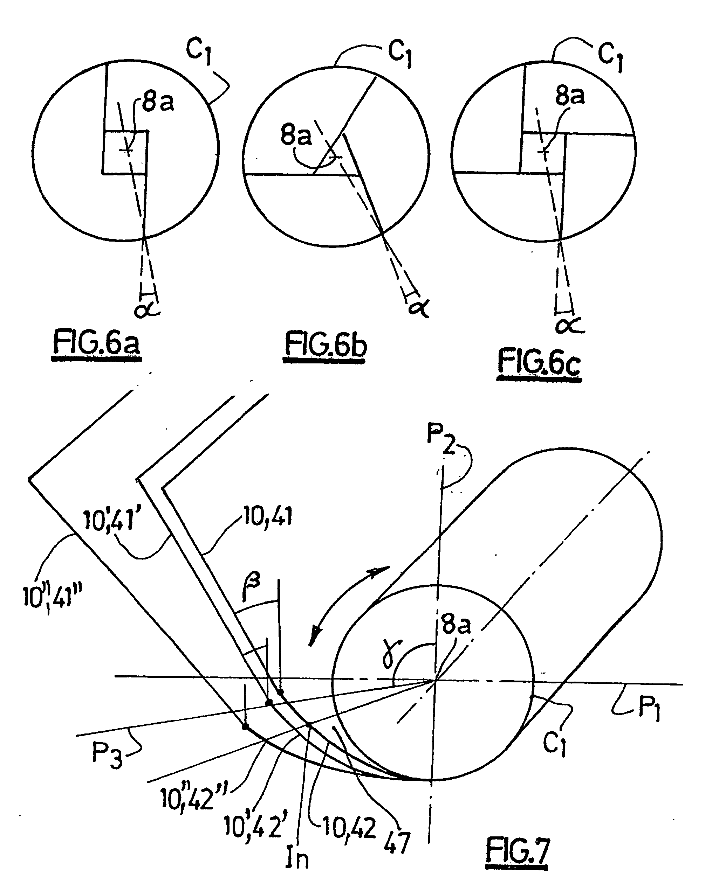

La cuve 5 peut-être amenée par basculement autour de l'axe horizontal X dans une position de vidage représentée figure 6.

La cuve 5 est soutenue de chaque côté à l'aide de paliers 16, 17 supportés par des cadres 18, 19 du châssis 3.

Le pétrin 1 comporte en outre des moyens de motorisation électrique 20, montés sur le châssis 3 aptes à commander la rotation du rotor 8 à l'aide de moyens d'entraînement tels qu'une courroie 22, montée sur une poulie 22a reliée au rotor 8.

Chaque cadre 18, 19 comprend une partie parallélépipédique 20 de fixation au châssis 3, et une partie cylindrique 21 de fixation au palier 16, 17, et saillant la cuve 5.

Précisément, du côté de la poulie 22a, le palier 16 coopère avec la partie cylindrique de fixation 21 du cadre 18.

Du côté opposé à la poulie 22a, en position de montage de la cuve 5, le palier 17 coopère avec la partie cylindrique de fixation 21 du cadre 19.

Les cadres 18, 19 sont fixés sur le châssis 3.

Le palier 17 est en outre le palier de basculement de la cuve 5.

Ce palier supporte en effet une pièce de raccordement 23 à la tige 24 d'un vérin 25 pivotant sur un montant horizontal inférieur 26 du châssis 3.

Ainsi, en position longue de la tige 24, la cuve 5 présente l'ouverture 12 orientée vers le haut, en position de travail des ingrédients.

En position courte de la tige 24, la pièce de raccordement 23 est entraînée en rotation vers le bas ce qui provoque le basculement de la cuve.

L'axe de basculement est horizontal dans cette réalisation et confondu avec l'axe du rotor 8.

Les paliers 16, 17 sont fixés sous les parois transversales 14, 15 respectivement, à l'aide de moyens de fixation 27.

Chaque palier 16, 17 comprend une couronne annulaire de fixation 28, et une couronne tubulaire 29.

En outre, le couvercle 13 de la cuve 5 est monté coulissant sur des colonnes de guidage 31.

En position de travail, notamment lors du mélange de la pâte, l'ouverture de la cuve 5 est fermée par le couvercle 30. Pour ouvrir la cuve 5, le couvercle 13 coulisse sur les colonnes 31 vers leur partie extrême 32.

En position d'ouverture de la cuve 5, la cuve 5 peut basculer indépendamment du couvercle 30, pour venir en position 5' de vidage.

Les colonnes de guidage 31 sont fixées sur le châssis 3 à l'aide de cornières 33.

On décrit maintenant la cuve 5 d'une capacité de 400 litres dans la réalisation représentée, et les moyens de pétrissage.

Le pétrin utilise trois pales 34, 35, 36.

La pale 34 comprend deux extrémités libres 34a, 34b, un premier segment rectiligne 34c de longueur I1, un deuxième segment rectiligne 34d de longueur I2 inférieur à I1. De même la pale 35 comprend deux extrémités libres 35a, 35b, un premier segment rectiligne 35c, un deuxième segment rectiligne 35d . Et la pale 36 comprend deux extrémités libres 36a, 36b, un premier segment rectiligne 36c, un deuxième segment rectiligne 36d.

Les extrémités libres 34a, 35a, 36a suivent une trajectoire circulaire C1 de rayon R1. Les extrémités libres 34b, 35b, 36b suivent une trajectoire C2 de rayon R2 légèrement inférieur à R1.

Les premiers segments 34c, 35c, 36c et les deuxièmes segments 34d, 35d, 36d de chaque pale 34, 35, 36 sont écartés d'un angle γ de l'ordre de 120°, et ne passent pas par l'axe de rotation 8a du rotor 8.

Plus précisément, comme représenté sur la figure 6, les premiers segments 34c, 35c, 36c font un angle α de l'ordre de 10° avec les rayons R1 passant par les extrémités libres respectivement 34a, 35a, 36a. De même les seconds segments 34d, 35d, 36d font un angle sensiblement égal à α avec les rayons R2 passant par les extrémités libres respectivement 34b, 35b, 36b. Cet angle α permet comme cela sera décrit d'obtenir un angle d'attaque « incliné» des pales sur la pâte ce qui améliore don étirement.

L'angle α est associé à la distance entre l'axe du rotor et les pales. On peut ainsi parler d'excentration des pales par rapport à l'axe du rotor.

La face interne 37 de la première paroi latérale 9 comprend une portion rectiligne 38 verticale, et une portion courbe 39, reliées au niveau de la jonction 40. La jonction 40 appartient sensiblement au plan P1 horizontal passant par l'axe du rotor 8. Ainsi la trajectoire C1 des extrémités 34a, 35a, 36a des pales 34, 35, 36 est sensiblement tangente à la face interne, en fait écartée d'un espace e, sensiblement à partir de la jonction 40 sur environ ¼ de tour jusqu'au sommet inférieur S de la trajectoire C1. La trajectoire circulaire C1 épousant la forme de la face interne 37, la portion 38 est tangente au sommet 44 de la trajectoire C1.

La face interne 37 de la deuxième paroi latérale 10 comprend une portion rectiligne 41, et une portion courbe 42, reliées au niveau de la jonction 43.

On définit, le long de la deuxième paroi latérale, dₙ la distance entre la tangente à la trajectoire C1 au sommet Sₙ, et l'intersection Iₙ entre la deuxième paroi 10 et le rayon R1 de la trajectoire passant par l'intersection Iₙ.

Du côté de la deuxième paroi latérale 10 :
- la portion 41 est inclinée d'un angle β de l'ordre de 10° avec la verticale ;
- l'intersection In est écartée du sommet Sₙ de la distance dₙ.

Ainsi le plan P1 coupe la deuxième paroi latérale 10 au niveau de l'intersection I1, le sommet Sn est repéré en référence 45, l'intersection I1 et le sommet 45 sont espacés de la distance d1.

L'angle δ entre, d'une part le plan vertical P2 passant par l'axe du rotor 8, et d'autre part le plan P3 passant par l'axe du rotor 8 et la jonction 43 entre la portion 41 et la portion 42, est de δ = 100°.

On a représenté figure 7 différentes variantes de forme de cuve faisant varier l'angle δ, entre une position 10,41, une autre position 10',41', une autre position 10",41". Les meilleurs résultats obtenus correspondent à une valeur de δ de l'ordre de 100°.

La cuve 5 présente ainsi une zone en forme de croissant 47 entre la deuxième paroi latérale 10 et la trajectoire C1. Cette zone 47 se rétrécit de plus en plus vers le fond de la cuve 5, jusqu'à ce que la distance dₙ soit sensiblement égale à l'espace e. La zone 47 diminue entre l'intersection I1 et le sommet inférieur S.

Dans la réalisation représentée, les distances sont les suivantes : R1 = 265 mm, R2 = 255 mm, d1 = 110 mm.

La demanderesse a constaté que la forme des pales 34, 35, 36 excentrées décrites, en particulier l'inclinaison des pales par rapport à la trajectoire, ainsi que la forme de la cuve décrite, en particulier la présence d'un espace 47, permettent d'obtenir d'excellents résultats de pétrissage. La demanderesse explique cette amélioration par rapport à l'art antérieur par un effet technique obtenu analogue à un laminage de la pâte. Le laminage progressif obtenu contribue à un travail d'étirement de la pâte recherché en boulangerie.

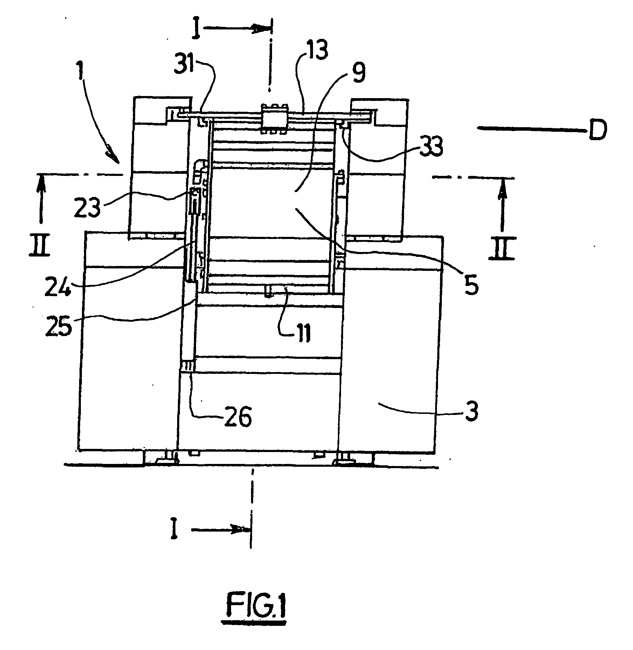

Dans la réalisation considérée de la figure 1, les principaux paramètres sont les suivants avec une pâte hydratée à 60% (farine : 100 Kg, sel : 400 g, eau :60 litres) :
- durée de pétrissage : 8min comprenant :

- frasage à 40 tours/minute pendant 2 minutes, avec inversement périodique du sens de rotation pendant le frasage
- pétrissage à 80 tours/minute pendant 6 minutes
- pression : pour du pain de type baguette, travail à 150 mbars pendant la phase de pétrissage.

On a utilisé trois pales. Dans d'autres réalisations le nombre de pales est différent, étant entendu que ces pales sont excentrées de manière à avoir une inclinaison par rapport au rayon de la trajectoire, par exemple deux pales (figure 6a), quatre pales (figure 6c).

L'effet de laminage peut également être obtenu grâce à la cuve 5 asymétrique décrite, mais avec des pales non inclinées, mais cet effet est alors réduit et la qualité de pétrissage est inférieure à celle obtenue par la combinaison cuve asymétrique et pales inclinées. Inversement l'effet de laminage peut également être obtenu grâce aux pales inclinées décrites mais avec une cuve symétrique, mais cet effet est alors réduit et la qualité de pétrissage est inférieure à celle obtenue par la combinaison cuve asymétrique et pales inclinées.

L'homme du métier comprend que le réglage de ces différents paramètres est à adapter selon notamment la recette utilisée et les quantités produites.

Le pétrin 1 comporte en outre un dispositif d'étanchéité 48 entre les paliers 16,17 et le rotor 8. Ce dispositif 48 comprend des joints 49 et une entretoise 50 entre les joints 49 et les paliers 16, 17. Ainsi, l'usinage du rotor 8 ne doit pas être nécessairement usiné très précisément pour assurer l'étanchéité.

Par ailleurs, la cuve comprend des moyens de régulation de la température de la cuve, tels qu'une double enveloppe refroidie incluant un fluide caloporteur, destinés notamment à maintenir la température malgré l'échauffement provoqué par le pétrissage, voire dans certains cas à ajuster la qualité du pétrissage en régulant la température de la pâte.

Concernant le dispositif de régulation de la pression dans la cuve, différents dispositifs peuvent être utilisés indépendamment de l'effet de laminage décrit précédemment.

## Revendications

1. Pétrin (1) à axe de mélange horizontal pour la fabrication de pâte de boulangerie ou analogue, comprenant un chassis (3) supportant une cuve (5) fermée par un couvercle (13) amovible, des moyens de pétrissage comprenant un rotor (8) à pales (7) à axe de rotation horizontal entraîné par des moyens de motorisation (10), des moyens de régulation de la pression dans la cuve pour un mélange sous pression et/ou sous vide, la cuve 5 ayant une section en forme générale de U, **caractérisé en ce que** la ou les parties extrême (34c, 34d ; 35c, 35d ; 36c, 36d) des pales (34, 35, 36) est ou sont rectilignes et s'étendent respectivement suivant une direction formant un angle compris entre 5 et 20° avec la direction radiale passant par l'extrémité libre associée (34a, 34b ; 35a, 35b ; 36a, 36b) de la pale (34, 35, 36).

2. Pétrin selon la revendication 1 **caractérisé en ce que** les moyens de pétrissage comprennent au moins un ensemble de pales (34c, 35c, 36c) montées sur le rotor, chaque ensemble comportant deux, trois ou quatre pales, l'extrémité libre de chaque pale suivant une trajectoire circulaire (C1).

3. Pétrin selon l'une quelconque des revendications 1 à 2 **caractérisé en ce** chaque pale comprend un premier segment (34c, 35c, 36c) sensiblement rectiligne et un second segment (34d, 35d, 36d), excentrés par rapport à l'axe du rotor (8), et inclinés entre eux de 90 à 120°.

4. Pétrin selon l'une quelconque des revendications 1 à 2 **caractérisé en ce que** chaque pale comprend une première portion axiale selon la direction radiale et une seconde portion distale inclinée de 5 à 20° par rapport à la première portion axiale.

5. Pétrin selon la revendication 4 **caractérisé en ce que** la partie extrême libre de la seconde portion distale est sensiblement rectiligne ou arrondie.

6. Pétrin selon l'une quelconque des revendications 1 à 5 **caractérisé en ce que** la vitesse de rotation des pales est de 10 à 250 tours/min, et la capacité de la cuve du pétrin est comprise entre 200 et 600 litres, typiquement 400 litres, le sens de rotation des pales et la vitesse de rotation étant selon les paramètres de pétrissage.

7. Pétrin selon l'une quelconque des revendication 1 à 6 **caractérisé en ce que** la cuve est asymétrique par rapport à un plan vertical P2 passant par l'axe de rotation X lorsque le pétrin est en position de fonctionnement.

8. Pétrin selon l'une quelconque des revendications 1 à 7 **caractérisé en ce qu'**il comprend une première paroi latérale (9) sensiblement verticale, et une deuxième paroi latérale (10) inclinée d'un angle de l'ordre de 10 à 30° avec la verticale, le fond de cuve courbe reliant la première paroi à la seconde paroi latérale.

9. Pétrin selon la revendication 8 **caractérisé en ce que** la cuve comprend, du côté de la deuxième paroi latérale, un espace (47) s'évasant vers le haut en forme de croissant, situé entre la deuxième paroi latérale et la trajectoire suivie par l'extrémité libre des pales, la paroi latérale inclinée étant écartée de cette trajectoire.

10. Pétrin selon la revendication 9 **caractérisé en ce que** sur une certaine ouverture angulaire, de l'ordre d'un quart de tour, du côté de la première paroi latérale (9), la paroi interne de la cuve est sensiblement tangente à la trajectoire décrite par le bord libre des pales.

11. Pétrin selon l'une quelconque des revendications 7 à 10 **caractérisé en ce que** l'angle entre, d'une part le plan vertical passant par l'axe du rotor, et d'autre part le plan passant par l'axe du rotor et la jonction entre la portion plane de la deuxième paroi latérale et la portion courbe de la deuxième paroi latérale, est compris entre 80 et 120°, typiquement 100°

12. Pétrin selon l'une quelconque des revendications 7 à 11 **caractérisé en ce que** la distance dans le plan parallèle au fond de cuve entre l'axe du rotor et la seconde paroi latérale est comprise entre 1,2 et 2 fois le rayon R1 du cercle emprunté par l'extrémité libre des pales

13. Pétrin selon l'une quelconque des revendications 1 à 12 **caractérisé en ce que** le dispositif pression/vide comprend des moyens de mise sous pression raccordés à la cuve à sa partie extrême supérieure.

14. Pétrin selon l'une quelconque des revendications 1 à 13 **caractérisé en ce qu'**il comprend des moyens de basculement comportant un palier de basculement de la cuve de chaque côté de la cuve, équipé d'au moins un vérin monté d'une part sur le chassis et d'autre part sur le palier, l'actionnement du vérin provoquant la rotation de la cuve autour de son axe horizontal entre au moins une position de versement de son contenu, le couvercle de la cuve étant retiré, une position de mélange, une position de nettoyage/maintenance.

15. Pétrin selon l'une quelconque des revendication 1 à 14 **caractérisé en ce que** le palier du rotor est coaxial et entouré par le palier de basculement de la cuve

16. Pétrin selon l'une quelconque des revendication 1 à 15 **caractérisé en ce qu'**il comprend un couvercle de verrouillage de la cuve, coulissant par rapport à l'ouverture de la cuve le long de colonnes de guidage, le couvercle étant en position retirée d'écartement libre de la cuve lorsque la cuve bascule.

17. Pétrin selon l'une quelconque des revendication 1 à 16 **caractérisé en ce qu'**il comprend un dispositif d'étanchéité comportant de chaque côté de la cuve un palier de rotor amovible comprenant une entretoise située entre l'arbre du rotor et les joints d'étanchéité du dispositif d'étanchéité.

18. Pétrin selon l'une quelconque des revendication 1 à 13 **caractérisé en ce que** la cuve comprend un dispositif de circulation destiné à refroidir ou maintenir en température le produit mélangé.

## Patentansprüche

1. Knetmaschine (1) mit horizontaler Mischachse für die Herstellung von Backteig oder dergleichen, mit einem einen von einem abnehmbaren Deckel (13) geschlossenen Behälter (5) tragenden Gestell (3), Knetmitteln mit einem mit Motorisierungsmitteln (10) angetriebenen Rotor (8) mit Schaufeln (7) mit horizontaler Drehachse, Regelungsmitteln des Drucks in dem Behälter für eine Mischung unter Druck und/oder Vakuum, wobei der Behälter (5) einen im allgemeinen U-förmigen Querschnitt aufweist, **dadurch gekennzeichnet, dass** der oder die Endabschnitte (34c, 34d; 35c, 35d; 36c, 36d) der Schaufeln (34, 35, 36) geradlinig sind und sich jeweils nach einer Richtung erstrecken, die einen Winkel von 5 bis 20° mit der radialen Richtung bildet, die durch das entsprechende freie Ende (34a, 34b; 35a, 35b; 36a, 36b) der Schaufel (34, 35, 36) verläuft.

2. Knetmaschine nach Anspruch 1, **dadurch gekennzeichnet, dass** die Knetmittel mindestens eine an dem Rotor montierte Schaufeleinheit (34c, 35c, 36c) umfassen, wobei jede Einheit aus zwei, drei oder vier Schaufeln besteht, wobei das freie Ende jeder Schaufel einem kreisförmigen Weg (C1) beschreibt.

3. Knetmaschine nach einem der Ansprüche 1 bis 2, **dadurch gekennzeichnet, dass** jede Schaufel ein erstes etwa geradliniges Segment (34c, 35c, 36c) und ein zweites Segment umfasst (34d, 35d, 36d), die in Bezug auf die Achse des Rotors (8) außermittig gelagert und um 90 bis 120° zueinander geneigt sind.

4. Knetmaschine nach einem der Ansprüche 1 bis 2, **dadurch gekennzeichnet, dass** jede Schaufel einen ersten, in radialer Richtung axialen Abschnitt und einen zweiten distalen Abschnitt umfasst, der um 5 bis 20° in Bezug auf den ersten axialen Abschnitt geneigt ist.

5. Knetmaschine nach Anspruch 4, **dadurch gekennzeichnet, dass** das freie Endteil des zweiten distalen Abschnitts etwa geradlinig oder abgerundet ist.

6. Knetmaschine nach einem der Ansprüche 1 bis 5, **dadurch gekennzeichnet, dass** die Drehzahl der Schaufeln 10 bis 250 Umdrehungen/min. beträgt, und dass das Fassungsvermögen des Behälters der Knetmaschine zwischen 200 und 600 Liter, typisch 400 Liter, beträgt, wobei die Drehrichtung der Schaufeln und die Drehzahl den Knetparametern entsprechen.

7. Knetmaschine nach einem der Ansprüche 1 bis 6, **dadurch gekennzeichnet, dass** der Behälter asymmetrisch ist in Bezug auf eine vertikale Ebene P2, die durch die Drehachse X verläuft, wenn sich die Knetmaschine in Betriebsposition befindet.

8. Knetmaschine nach einem der Ansprüche 1 bis 7, **dadurch gekennzeichnet, dass** sie eine erste, etwa vertikale Seitenwand (9) und eine zweite Seitenwand (10) umfasst, die in einem Winkel von etwa 10 bis 30° in Bezug auf die Vertikale geneigt ist, wobei der gekrümmte Behälterboden die erste Seitenwand mit der zweiten Seitenwand verbindet.

9. Knetmaschine nach Anspruch 8, **dadurch gekennzeichnet, dass** der Behälter auf der Seite der zweiten Seitenwand einen sich halbmondförmig nach oben erweiternden Freiraum (47) aufweist, der sich zwischen der zweiten Seitenwand und dem von dem freien Ende der Schaufeln beschriebenen Weg befindet, wobei die geneigte Seitenwand von diesem Weg entfernt ist.

10. Knetmaschine nach Anspruch 9, **dadurch gekennzeichnet, dass** die Innenwand des Behälters über eine bestimmte Winkelöffnung von etwa einer viertel Umdrehung auf der Seite der ersten Seitenwand (9) mit dem von dem freien Rand der Schaufeln beschriebenen Weg etwa tangierend ist.

11. Knetmaschine nach einem der Ansprüche 7 bis 10, **dadurch gekennzeichnet, dass** der Winkel zwischen einerseits der vertikalen, durch die Achse des Rotors verlaufenden Ebene und andererseits der durch die Achse des Rotors verlaufenden Ebene und der Verbindung zwischen dem flachen Abschnitt der zweiten Seitenwand und dem gekrümmten Abschnitt der zweiten Seitenwand, zwischen 80 und 120°, typisch 100°, beträgt.

12. Knetmaschine nach einem der Ansprüche 7 bis 11, **dadurch gekennzeichnet, dass** der Abstand in der zum Behälterboden parallelen Ebene zwischen der Achse des Rotors und der zweiten Seitenwand zwischen 1,2 und 2 Mal den Radius des von dem freien Ende der Schaufeln genommenen Weges beträgt.

13. Knetmaschine nach einem der Ansprüche 1 bis 12, **dadurch gekennzeichnet, dass** die Druck-/Vakuum-Vorrichtung Unterdrucksetzungsmittel umfasst, die an den Behälter, am oberen Endteil desselben angeschlossen sind.

14. Knetmaschine nach einem der Ansprüche 1 bis 13, **dadurch gekennzeichnet, dass** sie Kippmittel umfasst mit einem Kipplager des Behälters auf jeder Seite des Behälters, das mit mindestens einem Zylinder ausgestattet ist, der einerseits an dem Gestell und andererseits an dem Lager montiert ist, wobei die Betätigung des Zylinders die Drehung des Behälters um seine horizontale Achse zwischen mindestens einer Ausgießposition seines Inhalts, wobei der Deckel des Behälters abgenommen ist, einer Mischposition und einer Reinigungs-/Wartungsposition bewirkt.

15. Knetmaschine nach einem der Ansprüche 1 bis 14, **dadurch gekennzeichnet, dass** das Lager des Rotors koaxial und von dem Kipplager des Behälters umgeben ist.

16. Knetmaschine nach einem der Ansprüche 1 bis 15, **dadurch gekennzeichnet**, das sie einen Verriegelungsdeckel des Behälters umfasst, der in Bezug auf die Öffnung des Behälters entlang Führungsstützen verschiebbar ist, wobei der Deckel sich in abgenommener Position in freier Entfernung des Behälters befindet, wenn der Behälter kippt.

17. Knetmaschine nach einem der Ansprüche 1 bis 16, **dadurch gekennzeichnet, dass** sie eine Dichtungsvorrichtung umfasst, die auf jeder Seite des Behälters ein abnehmbares Rotorlager aufweist, mit einem zwischen der Rotorwelle und den Dichtungen der Dichtungsvorrichtung angeordneten Steg.

18. Knetmaschine nach einem der Ansprüche 1 bis 13, **dadurch gekennzeichnet, dass** der Behälter eine Umwälzvorrichtung umfasst, die das gemischte Produkt abkühlen oder auf Temperatur halten soll.

## Claims

1. A dough mixer (1) with a horizontal mixing axis for making bakery dough or the like, comprising a chassis (3) supporting a vessel (5) closed off by a removable lid (13), kneading means comprising a rotor (8) with blades (7) with a horizontal axis of rotation driven by drive means (10), means of regulating the pressure in the vessel for mixing under pressure and/or under vacuum, the vessel (5) having a cross-section in the general shape of a U, **characterised in that** the end part or parts (34c, 34d; 35c, 35d; 36c, 36d) of the blades (34, 35, 36) is or are rectilinear and extend respectively in a direction forming an angle of between 5° and 20° with the radial direction passing through the associated free end (34a, 34b; 35a, 35b; 36a, 36b) of the blade (34, 35, 36).

2. A dough mixer according to Claim 1, **characterised in that** the kneading means comprise at least one set of blades (34c, 35c, 36c) mounted on the rotor, each set comprising two, three or four blades, the free end of each blade following a circular path (C1).

3. A dough mixer according to one of Claims 1 to 2, **characterised in that** each blade comprises a first substantially rectilinear segment (34c, 35c, 36c) and a second segment (34d, 35d, 36d), both off centre with respect to the axis of the rotor (8), and inclined at 90° to 120° to each other.

4. A dough mixer according to any one of Claims 1 to 2, **characterised in that** each blade comprises a first axial portion in the radial direction and a second distal portion inclined by 5° to 20° with respect to the first axial portion.

5. A dough mixer according to Claim 4, **characterised in that** the free end part of the second distal portion is rectilinear or rounded.

6. A dough mixer according to any one of Claims 1 to 5, **characterised in that** the speed of rotation of the blades is 10 to 250 revolutions/min, and the capacity of the dough mixer is between 200 and 600 litres, typically 400 litres, the direction of rotation of the blades and the speed of rotation being adjusted according to the kneading parameters.

7. A dough mixer according to any one of Claims 1 to 6, **characterised in that** the vessel is asymmetric with respect to a vertical plane P2 passing through the axis of rotation X when the dough mixer is in the operating position.

8. A dough mixer according to any one of Claims 1 to 7, **characterised in that** it comprises a first substantially vertical lateral wall (9) and a second lateral wall (10) inclined by an angle of around 10° to 30° with the vertical, the curved vessel bottom connecting the first wall to the second lateral wall.

9. A dough mixer according to Claim 8, **characterised in that** the vessel comprises, on the same side as the second lateral wall, a space (47) broadening out towards the top in the form of a crescent, situated between the second lateral wall and the path followed by the free end of the blades, the inclined lateral wall being separate from this path.

10. A dough mixer according to Claim 9, **characterised in that**, over a certain angular opening, around a quarter of a turn, on the same side as the first lateral wall (9), the internal wall of the vessel is substantially tangent to the path described by the free edge of the blades.

11. A dough mixer according to any one of Claims 7 to 10, **characterised in that** the angle between on the one hand the vertical plane passing through the axis of the rotor and on the other hand the plane passing through the axis of the rotor and the junction between the rectilinear portion of the second lateral wall and the curved portion of the second lateral wall is between 80° and 120°, typically 100°.

12. A dough mixer according to any one of Claims 7 to 11, **characterised in that** the distance in the plane parallel to the vessel bottom between the axis of the rotor and the second lateral wall is between 1.2 and 2 times the radius R1 of the circle followed by the free end of the blades.

13. A dough mixer according to any one of Claims 1 to 12, **characterised in that** the pressure/vacuum device comprises pressurisation means connected to the vessel at its top end part.

14. A dough mixer according to any one of Claims 1 to 13, **characterised in that** it comprises tilting means comprising a bearing for tilting the vessel on each side of the vessel, equipped with at least one cylinder mounted on the one hand on the chassis and on the other hand on the bearing, the actuation of the cylinder causing the rotation of the vessel about its horizontal axis between at least one position of tipping out its content, the lid on the vessel being removed, a mixing position and a cleaning/maintenance position.

15. A dough mixer according to any one of Claims 1 to 14, **characterised in that** the rotor bearing is coaxial with and surrounded by the vessel tilting bearing.

16. A dough mixer according to any one of Claims 1 to 15, **characterised in that** it comprises a lid for locking the vessel, sliding with respect to the vessel opening along guide columns, the lid being in the removed position of free separation from the vessel when the vessel is tilted.

17. A dough mixer according to any one of Claims 1 to 16, **characterised in that** it comprises a sealing device comprising, on each side of the vessel, a removable rotor bearing comprising a strut situated between the rotor shaft and the seals of the sealing device.

18. A dough mixer according to any one of Claims 1 to 13, **characterised in that** the vessel comprises a circulation device intended to cool the mixed product or maintain its temperature.
